# EUROPEAN PATENT SPECIFICATION

(11) **EP 1 986 202 B1**
(45) Date of publication and mention of the grant of the patent: **10.10.2012**
(21) Application number: 08152944.8
(22) Date of filing: 18.03.2008
(51) Int. Cl.: H01G 9/20

(54) **Dye-sensitized solar cell containing fluorescent material and method of manufacturing the same**
Farbstoffsensibilisierte Fluoreszenzmaterial enthaltende Solarzelle und Herstellungsverfahren dafür
Cellule solaire sensibilisée aux colorants contenant un matériau fluorescent et son procédé de fabrication

(30) Priority: 27.04.2007 KR 20070041183; 20.08.2007 KR 20070083421
(43) Date of publication of application: 29.10.2008
(73) Proprietor: Industry Foundation of Chonnam National University, Buk-gu Gwangju 500-757 (KR); Innofilter Co., Ltd, Incubator, 300, Yongbong-dong, Buk-gu Gwangju (KR)
(72) Inventor: Park, Kyung Hee, Gwangju (KR); Jeong, Hyung Gon, Gwangju (KR); Gu, Hal Bon, Gwangju (KR); Cho, Sung Yong, Gwangju (KR)
(74) Representative: Holmberg, Magnus

(56) References cited:
- KR-B1- 100 773 147
- KR-B1- 100 786 334
- US-A1- 2005 150 545

## Description

### BACKGROUND OF THE INVENTION

### 1. Field of the Invention

The present invention relates to a dye-sensitized solar cell containing fluorescent material and a method of manufacturing the same.

### 2. Description of the Related Art

A dye-sensitized solar cell is a new type of solar cell having a high energy conversion efficiency and that may be manufactured at a low cost. A dye-sensitized solar cell is one type of solar cell that utilizes the sunlight absorption capability of dye to chemically generate electricity. The dye-sensitized solar cell is formed of a photoelectrode that includes a metal oxide and a dye provided on a transparent glass substrate, an electrolyte, and an opposing electrode. See for example US 2005/150545.

The photoelectrade, which is present in the form of a porous film, is formed of an n-type transition metal oxide semiconductor having a large band gap, such as TiO₂, ZnO, and SnO₂, and a dye of a monomolecular layer is adsorbed to a surface thereof When sunlight is irradiated onto the solar cell, electrons near the Fermi energy in the dye absorb the solar energy and are excited to an upper level that is not full of electrons. At this time, holes in the lower level from where the electrons escaped are again filled by electrons provided by ions in the electrolyte. The ions that provide electrons to the dye move to the photoelectrode to thereby receive electrons. During this process, the photoelectrode operates as a catalyst for an oxidation-reduction reaction of the ions in the electrolyte to thereby function to provide electrons to the ions in the electrolyte via the oxidation-reduction reaction on the surface of the photoelectrode.

In order to enhance the energy conversion efficiency in the conventional dye-sensitized solar cell, a platinum thin film that provides for a superior catalytic effect is typically used. Also used are electrodes that utilize precious metals such as palladium, silver, and gold, which have characteristics similar to that of platinum, and electrodes utilizing carbon-based materials such as carbon black and graphite. However, the dye-sensitized solar cell using the conventional platinum electrode as the opposing electrode nevertheless continues to suffer from a low efficiency with respect to converting sunlight into electrical energy. Hence, various ways to improve the efficiency of the solar cell are being explored.

### SUMMARY OF THE INVENTION

Aspects of the present invention provide a dye-sensitized solar cell and a method of manufacturing the same, in which a fluorescent material is mixed in a photoelectrode portion of the dye-sensitized solar cell to thereby obtain a high energy conversion efficiency (of two times or greater) due to illumination characteristics of the fluorescent material in the visible spectrum.

Aspects of the present invention also provide a dye-sensitized solar cell and a method of manufacturing the same, in which light is emitted in dark areas as a result of fluorescent material contained in a photoelectrode of the dye-sensitized solar cell, such that the dye-sensitized solar cell simultaneously functions to provide an advertising effect in the dark.

The above and other aspects of the present invention will become more apparent to one of daily skill in the art to which the present invention pertains by referencing a detailed description of the present invention given below.

According to an aspect of the present invention, there is provided a dye-sensitized solar cell including an opposing electrode and a photoelectrode. The opposing electrode includes a light-transmitting layer formed of a transparent glass substrate and an FTO (fluorine-doped tin oxide) thin film deposited on the transparent glass substrate, and a catalyst layer formed by depositing platinum on the FTO thin film. The photoelectrode includes a glass substrate and an FTO thin film deposited on the glass substrate. The photoelectrode is coated with a mixture of a fluorescent material and a transition metal oxide that includes titanium dioxide to thereby be adsorbed with a dye. Furthermore, the opposing electrode and the photoelectrode are sealed using an adhesive film, and an electrolyte is filled between the opposing electrode and the photoelectrode. The fluorescent material of the photoelectrode may be at least one of tungstate, silicate, and borate, to thereby be adsorbed with a dye; and

Preferably, the fluorescent material of the photoelectrode is provided by an amount that is 0.01 to 20 wt. parts based on 100 parts by wt. of a photoelectrode paste solid that is formed by mixing the transition metal oxide and the fluorescent material. The fluorescent material is a lanthanum-based material of YAG (Yttrium Aluminum Garnet: Y₃Al₅O₁₂) that emits light in the visible spectrum, the lanthanum-based material being formed of a dye selected from the group consisting of La, Ce, Pr, Nd, Sm, Eu, Y, and Ho ions and elements, and mixtures thereof.

According to another aspect of the present invention, there is provided a method of manufacturing a dye-sensitized solar cell including: producing a photoelectrode paste by mixing a transition metal oxide and a fluorescent material; producing a photoelectrode by coating the paste on an FTO (fluorine-doped tin oxide)-treated transparent glass substrate, and following drying and heat-treating of the transparent glass substrate, adsorbing a dye thereto; producing an opposing electrode by coating a platinum layer on an FTO-treated glass substrate; and sealing the photoelectrode and the opposing electrode using an adhesive film, and filling an electrolyte in a space between the photoelectrode and the opposing electrode.

In the step of producing the photoelectrode paste, preferably, agitation is performed through 20 cycles, in which each cycle includes 12-18 minutes of agitation and 2-7 minutes of rest.

### BRIEF DESCRIPTION OF THE DRAWINGS

The above and other aspects and features of the present invention will become more apparent by describing in detail exemplary embodiments thereof with reference to the attached drawings, in which:
FIG. 1 is a sectional view of a dye-sensitized solar cell according to an embodiment of the present invention;
FIG. 2 is a graph showing current-voltage curves of an Example of the present invention and of Comparative Examples; and
FIG. 3 is a graph showing how current-voltage curves vary depending on the amount of fluorescent material used in the dye-sensitized solar cell of the present invention.

### DETAILED DESCRIPTION OF THE EXEMPLARY EMBODIMENTS

The present invention will now be described more fully with reference to the accompanying drawings, in which exemplary embodiments of the invention are shown. The invention may, however, be embodied in many different forms and should not be construed as being limited to the embodiments set forth herein. Rather, these embodiments are provided so that this disclosure will be thorough and complete, and will fully convey the concept of the invention to those skilled in the art and will only be limited by the scope of the claims.

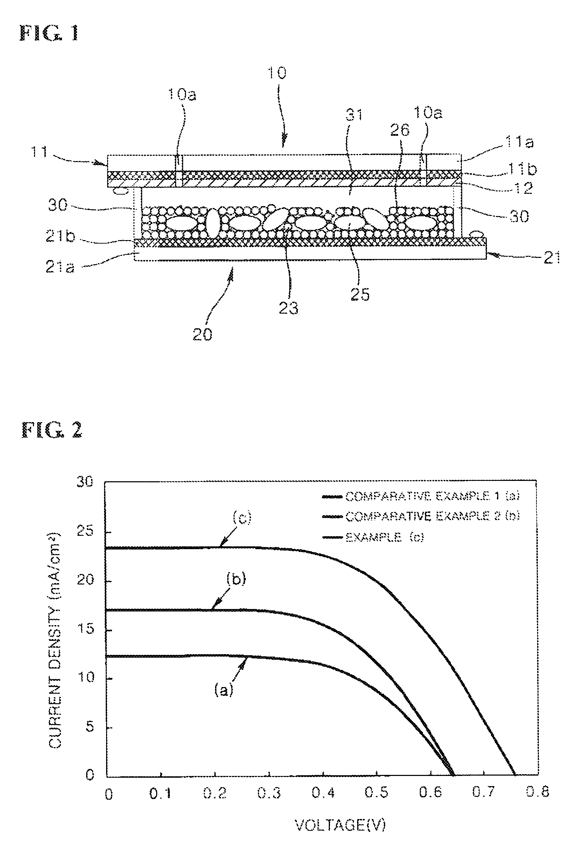

FIG. 1 is a sectional view of a dye-sensitized solar cell according to an embodiment of the present invention. Referring to FIG. 1, the dye-sensitized solar cell according to an embodiment of the present invention includes an opposing electrode 10 and a photoelectrode 20. The opposing electrode 10 includes a light-transmitting layer 11 formed of a transparent glass substrate 11a and an FTO (fluorine-doped tin oxide) thin film 11b deposited on the transparent glass substrate 11 a, and a catalyst layer 12 formed by depositing platinum on the FTO thin film 11b. The photoelectrode 20 includes a glass substrate 21a and an FTO thin film 21 deposited on the glass substrate 21a, The photoelectrode 20 is coated with a paste formed by mixing titanium dioxide 23, polyethylene glycol, TritonX-100, acetylacetone, ethanol, water, nitric acid, and a fluorescent material 25. After drying and heat-treating the paste, a dye 26 is adsorbed to the photoelectrode 20. Subsequently, an adhesive film 30 is positioned between the opposing electrode 10 and the photoelectrode 20, and a heat transfer machine is used to seal the opposing electrode 10 and the photoelectrode 20. Finally, an electrolyte 31 including a redox couple (typically I⁻/I₃⁻) is filled through small holes 10a formed through the opposing electrode 10.

An important feature of the present invention relates to the introduction of the fluorescent material during manufacture of the photoelectrode. A key function of the fluorescent material is that of enhancing the energy conversion efficiency of the dye-sensitized solar cell of the present invention. Also, by exhibiting illumination characteristics when there is only a small amount of sunlight, the fluorescent material provides the solar cell with an additional function. For example, during the day, the solar cell functions in the normal fashion to generate electricity, while at night, the fluorescent material emits light so that the solar cell can provide an advertising effect.

In addition, a method of manufacturing a dye-sensitized solar cell containing a fluorescent material according to an embodiment of the present invention includes producing a photoelectrode paste by agitating titanium dioxide (Degussa P-25), polyethylene glycol (molecular weight of 20,000), TritonX-100, and ethanol with a nitric acid solution, and after agitating acetylacetone with water, adding YAG (Ce) (Yttrium Aluminum Garnet: Y₃Al₅O₁₂) and again performing agitation. The method also includes: producing a photoelectrode by coating the paste on an FTO (fluorine-doped tin oxide)-treated glass substrate, and following drying and heat-treating of the transparent glass substrate, adsorbing a dye thereto; producing an opposing electrode by coating a platinum layer on an FTO-treated glass substrate; and sealing the photoelectrode and the opposing electrode using an adhesive film, and filling an electrolyte in a space between the photoelectrode and the opposing electrode.

### [Example]

The dye-sensitized solar cell of the present invention was manufactured in the following manner. Titanium dioxide in the amount of 2g, 0.4g of polyethylene glycol (molecular weight of 20,000), 0.1g of TritonX-100, 1mℓ of a nitric acid solution, 2mℓ of ethanol, 0.2g of acetylacetone, and 7mℓ of distilled water were placed in a spin agitator, and then the agitator was started. Agitation was performed through 20 cycles, in which each cycle included 15 minutes of agitation and 5 minutes of rest. Subsequently, fluorescent material of YAG(Ce) was added to thereby make a photoelectrode paste solid. The amount of YAG(Ce) was 10 wt. parts based on 100 parts by wt. of the photoelectrode paste solid. Ten more agitation cycles were then performed to thereby produce a photoelectrode paste containing the fluorescent material. Next, the paste was coated on an FTO-treated transparent glass substrate, after which drying was performed for 30 minutes at 80°C to thereby perform an initial heat-treating process. Next, a secondary heat-treating process was performed for 30 minutes at a temperature of 450°C to thereby produce a photoelectrode. Two small holes, through which an electrolyte is to be subsequently injected, were then formed in a substrate coated with FTO, after which platinum in the form of a thin film was coated on the substrate to thereby produce an opposing electrode. An adhesive film was disposed between the opposing electrode and the photoelectrode, after which the opposing electrode and the photoelectrode were sealed through the application of heat. Next, a liquid electrolyte was injected through the small holes formed in the opposing electrode, after which the small holes were sealed, thus completing the dye-sensitive solar cell. In order to improve the energy conversion efficiency of the solar cell, the amount of the fluorescent material YAG(Ce) is preferably 0.01 to 20 wt. parts based on 100 parts by wt. of the photoelectrode paste solid, and more preferably, 0.1 to 10 wt. parts based on 100 parts by wt. of the photoelectrode paste solid.

### [Comparative Examples]

Except for omitting the fluorescent material YAG(Ce) from the configuration of the photoelectrode, a sample for use as Comparative Example 1 was made identically as the Example, and a sample for use as Comparative Example 2 was made by irradiating UV (ultraviolet) light following the secondary heat-treating process during production of the photoelectrode. Comparative Examples 1 and 2 were compared with the Example of the present invention.

Table 1 compares electrical characteristics of samples that include a photoelectrode made using known methods with those of a sample made according to the present invention. The sample including a photoelectrode containing fluorescent material and made according to the present invention exhibited superior electrical characteristics. In the conventional configuration, an improvement in energy conversion efficiency has been reported when UV light is irradiated following heat-treating during manufacture of the photoelectrode. The sample utilizing such a conventional technique has also been compared.

Table 2 illustrates how electrical characteristics among samples produced according to the present invention varied depending on the amount of the fluorescent material (in parts by weight) used.

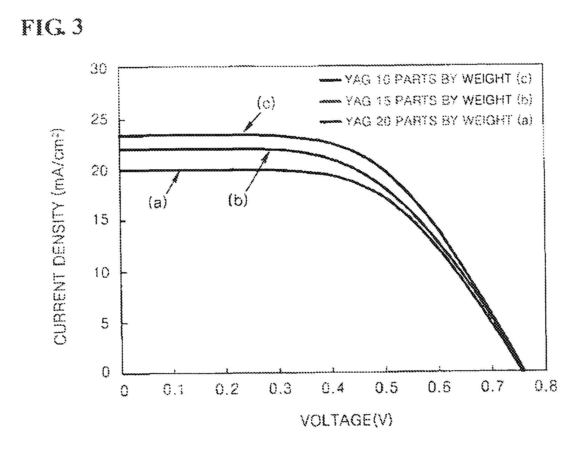

Reference is also made to FIG. 2 which shows current-voltage curves of the Example of the present invention and of Comparative Examples 1 and 2, and FIG. 3 which shows how current-voltage curves vary depending on the amount of fluorescent material used in the dye-sensitized solar cell of the present invention.

**Table 1: Open-Circuit Voltage and Energy Conversion Efficiency**

| Sample | Open-circuit voltage (V) | Current density (mA/cm²) | Fill Factor | Energy Conversion Efficiency (%) |
|---|---|---|---|---|
| Comparative Example 1 | 0.64 | 12.3 | 0.55 | 4.3 |
| Comparative Example 2 | 0.64 | 17.1 | 0.52 | 5.7 |
| Example | 0.75 | 23.4 | 0.52 | 9.1 |

**Table 2: Energy Conversion Efficiency Depending on Content of Fluorescent Material YAG(Ce)**

| Fluorescent material content | Open-circuit voltage (V) | Current density (mA/cm²) | Fill Factor | Energy Conversion Efficiency (%) |
|---|---|---|---|---|
| YAG 10 parts by weight | 0.75 | 23.4 | 0.52 | 9.1 |
| YAG 15 parts by weight | 0.75 | 21.9 | 0.49 | 8.0 |
| YAG 20 parts by weight | 0.75 | 20.0 | 0.51 | 7.7 |

As described above, according to the present invention, by introducing fluorescent material in a photoelectrode of a dye-sensitive solar cell, a high energy conversion efficiency of the solar cell is obtained due to the light-emitting characteristics of the fluorescent material in the visible spectrum.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A dye-sensitized solar cell comprising:
an opposing electrode that includes a light-transmitting layer formed of a transparent glass substrate and an FTO (fluorine-doped tin oxide) thin film deposited on the transparent glass substrate, and a catalyst layer formed by depositing platinum on the FTO thin film;
a photoelectrode that includes a glass substrate and an FTO thin film deposited on the glass substrate,
a paste layer coated on the photoelectrode; and
a dye absorbed on the paste layer;
wherein the paste layer includes a transition metal oxide that includes titanium dioxide and a fluorescent material,
wherein the opposing electrode and the photoelectrode are sealed using an adhesive film, and an electrolyte is filled between the opposing electrode and the photoelectrode,
**characterized in that** the fluorescent material is a lanthanum-based material of YAG (Yttrium Aluminum Garnet: Y₃Al₅O₁₂ that emits light in the visible spectrum, the lanthanum-based material being formed of a dye selected from the group consisting of La, Ce, Pr, Nd, Sm, Eu, Y, and Ho ions and elements, and mixtures thereof.

2. The dye-sensitized solar cell of claim 1, wherein the fluorescent material of the photoelectrode includes an amount that is 0.01 to 20 wt. parts based on 100 parts by wt. of a photoelectrode paste solid that is formed by mixing the transition metal oxide and the fluorescent material.

3. A method of manufacturing a dye-sensitized solar cell comprising:
producing a photoelectrode paste by mixing a transition metal oxide and a fluorescent material;
producing a photoelectrode by coating the paste on an FTO (fluorine-doped tin oxide)-treated transparent glass substrate, and following drying and heat-treating of the transparent glass substrate, adsorbing a dye thereto;
producing an opposing electrode by coating a platinum layer on an FTO-treated glass substrate; and
sealing the photoelectrode and the opposing electrode using an adhesive film, and filling an electrolyte in a space between the photoelectrode and the opposing electrode,
characterized in/that the fluorescent material is a lanthanum-based material of YAG (Yttrium Aluminum Garnet: Y₃Al₅O₁₂) that emits light in the visible spectrum, the lanthanum-based material being formed of a dye selected from the group consisting of La, Ce, Pr, Nd, Sm, Eu, Y, and Ho ions and elements, and mixtures thereof.

4. The method of claim 3, wherein the producing of the photoelectrode paste is implemented with 20 cycles of agitation, in which each cycle includes 12-18 minutes of agitation and 2-7 minutes of rest.

## Patentansprüche

1. Farbstoffsensibilisierte Solarzelle, enthaltend:
eine Gegenelektrode, die eine Licht übertragende Schicht bestehend aus einem transparenten Glassubstrat und einer auf dem transparenten Glassubstrat abgeschiedenen FTO-Dünnschicht (Fluor-dotiertes Zinnoxid) und eine durch Abscheiden von Platin auf der FTO-Dünnschicht gebildete katalytische Schicht umfasst; und
eine Photoelektrode, die ein Glassubstrat und eine auf dem Glassubstrat abgeschiedene FTO-Dünnschicht umfasst,
eine auf der Photoelektrode aufgetragene Pastenschicht; und
einen auf der Pastenschicht absorbierten Farbstoff;
wobei die Pastenschicht ein Übergangsmetalloxid beinhaltet, das Titandioxid und ein fluoreszierendes Material enthält,
wobei die Gegenelektrode und die Photoelektrode mittels einer Klebstoffschicht versiegelt sind und zwischen der Gegenelektrode und der Photoelektrode ein Elektrolyt eingefüllt ist,
**dadurch gekennzeichnet, dass** das fluoreszierende Material ein auf Lanthan basierendes Material aus YAG (Yttrium-Aluminium-Granat: Y₃Al₅O₁₂) ist, das Licht im sichtbaren Spektrum aussendet, wobei das auf Lanthan basierende Material aus einem Farbstoff aus der Gruppe bestehend aus La-, Ce-, Pr-, Nd-, Sm-, Eu-, Y- und Ho-Ionen und -Elementen und Gemischen davon gebildet ist.

2. Farbstoffsensibilisierte Solarzelle nach Anspruch 1, wobei das fluoreszierende Material der Photoelektrode einen Anteil von 0,01 bis 20 Gewichtsteilen auf 100 Gewichtsteile eines Photoelektroden-Pastenfeststoffs enthält, der durch Mischen des Übergangsmetalloxids mit dem fluoreszierenden Material hergestellt wird.

3. Verfahren zur Herstellung einer farbstoffsensibilisierten Solarzelle, enthaltend:
Herstellen einer Photoelektrodenpaste durch Mischen eines Übergangsmetalloxids mit einem fluoreszierenden Material;
Herstellen einer Photoelektrode durch Auftragen der Paste auf ein mit FTO (mit Fluor dotiertes Zinnoxid) behandeltes transparentes Glassubstrat und anschliessendes Trocknen und Wärmebehandeln des transparenten Glassubstrats, wobei ein Farbstoff darauf adsorbiert wird;
Herstellen einer Gegenelektrode durch Aufbringen einer Platinschicht auf ein mit FTO behandeltes Glassubstrat, und
Versiegeln der Photoelektrode und der Gegenelektrode mittels einer Klebstoffschicht und Einfüllen eines Elektrolyts in einen Zwischenraum zwischen der Photoelektrode und der Gegenelektrode,
**dadurch gekennzeichnet, dass** das fluoreszierende Material ein auf Lanthan basierendes Material aus YAG (Yttrium-Aluminium-Granat: Y₃Al₅O₁₂) ist, das Licht im sichtbaren Spektrum aussendet, wobei das auf Lanthan basierende Material aus einem Farbstoff aus der Gruppe bestehend aus La-, Ce-, Pr-, Nd-, Sm-, Eu-, Y- und Ho-Ionen und -Elementen und Gemischen davon gebildet ist.

4. Verfahren nach Anspruch 3, wobei die Herstellung der Photoelektrodenpaste mit 20 Mischzyklen erfolgt, wobei jeder Zyklus 12-18 Minuten Mischen und 2-7 Minuten Ruhe umfasst.

## Revendications

1. Cellule solaire sensibilisée par colorant, comprenant:
une contre-électrode qui comprend une couche transmettant la lumière laquelle est formée d'un substrat transparent en verre et d'une couche mince de FTO (oxyde d'étain dopé à la fluorine) déposée sur le substrat en verre, et une couche catalytique formée en déposant du platine sur la couche mince de FTO; et
une photo-électrode qui comprend un substrat en verre et une couche mince de FTO déposée sur le substrat en verre,
une couche de pâte appliquée sur la photo-électrode; et
un colorant absorbé sur la couche de pâte;
où la couche de pâte comprend un oxyde de métal de transition qui comprend du dioxyde de titane et un matériau fluorescent,
où la contre-électrode et la photo-électrode sont scellées au moyen d'un film adhésif et un électrolyte est introduit entre la contre-électrode et la photo-électrode,
**caractérisée en ce que** le matériau fluorescent est un matériau à base de lanthane en YAG (grenat d'yttrium-aluminium: Y₃Al₅O₁₂) qui émet de la lumière dans le spectre visible, le matériau à base de lanthane étant formé d'un colorant choisi parmi le groupe comprenant les ions et éléments de La, Ce, Pr, Nd, Sm, Eu, Y et Ho et les mélanges de ceux-ci.

2. Cellule solaire sensibilisée par colorant selon la revendication 1, où le matériau fluorescent de la photo-électrode comprend une quantité de 0,01 à 20 parties en poids sur 100 parties en poids d'un solide de pâte pour la photo-électrode qui est formé en mélangeant l'oxyde de métal de transition avec le matériau fluorescent.

3. Procédé de fabrication d'une cellule solaire sensibilisée par colorant, comprenant:
produire une pâte pour une photo-électrode en mélangeant un oxyde de métal de transition avec un matériau fluorescent;
produire une photo-électrode en appliquant la pâte sur un substrat transparent en verre traité FTO (oxyde d'étain dopé à la fluorine) avec séchage et traitement thermique subséquent du substrat transparent en verre en adsorbant un colorant sur celui-ci;
produire une contre-électrode en appliquant une couche de platine sur un substrat en verre traité FTO; et
sceller la photo-électrode et la contre-électrode au moyen d'un film adhésif, et introduire un électrolyte dans un espace entre la photo-électrode et la contre-électrode,
**caractérisée en ce que** le matériau fluorescent est un matériau à base de lanthane en YAG (grenat d'yttrium-aluminium: Y₃Al₅O₁₂) qui émet de la lumière dans le spectre visible, le matériau à base de lanthane étant formé d'un colorant choisi parmi le groupe comprenant les ions et éléments de La, Ce, Pr, Nd, Sm, Eu, Y et Ho et les mélanges de ceux-ci.

4. Procédé selon la revendication 3, où la production de la pâte pour une photo-électrode est mise en oeuvre avec 20 cycles de mélange, où chaque cycle comprend 12-18 minutes de mélange et 2-7 minutes de repos.
